# EUROPEAN PATENT SPECIFICATION

(11) **EP 1 249 969 B1**
(45) Date of publication and mention of the grant of the patent: **07.05.2008**
(21) Application number: 02251562.1
(22) Date of filing: 06.03.2002
(51) Int. Cl.: H04L 12/56

(54) **Wireless group communication system**
Drahtloses Gruppenkommunikationssystem
Système de communication de groupe sans fil

(30) Priority: 09.04.2001 US 828149
(43) Date of publication of application: 16.10.2002
(73) Proprietor: Nokia Corporation, 02150 Espoo (FI)
(72) Inventor: Wasenius, Reidar, 02230 Esbo (FI)
(74) Representative: Read, Matthew Charles

(56) References cited:
- EP-A- 1 022 876
- EP-A- 1 229 442
- US-A- 6 069 896

## Description

### BACKGROUND OF THE INVENTION:

### FIELD OF THE INVENTION

The invention relates generally to a system involving a group of wireless terminals which interact and more particularly to a system for allowing a group of wireless terminals to share functions therebetween for increased functionality.

### DESCRIPTION OF THE BACKGROUND

Wireless terminals of various kinds have become very popular in recent years. This is especially true of cellular telephones which provide a very convenient manner of reaching people no matter where they are located and allowing cellular telephone owners freedom to make calls from whereever they are located. Other wireless devices have similarly become popular. These include, mobile phones, cordless phones, pagers, electronic notebooks, computers with integrated radios, wireless headsets, wireless printers, wireless keyboards, and other electronic equipment which utilize wireless radio links.

As much as possible, additional functions have been added to cellular telephones and other wireless devices to make them more useful and also more fun to use. In addition to basic communication needs, these devices now also allow users the possibility of playing games, accessing the Internet for information and for educational purposes. Thus, any additional function which can be added to these devices in order to make their use more fun, more educational and more useful is important.

It is possible for two or more wireless devices to interact among themselves using a short range radio link. One such protocol is known as Bluetooth which is publically available on the Internet at http://www.bluetooth.com. A further description of such a system is found in WO 00/69186 which shows a system utilizing the Blue tooth protocol.

As indicated in these Bluetooth publications, two or more wireless devices can communicate with each other by making one of the devices a master device which polls other devices in the area to form an active group. However, the system described in this publication only relates to the forming of the communication system and does not define any specific additional functionality to Bluetooth wireless connection specification of a group which is created in the various wireless devices after they form a group.

U.S. Patent 4,820,167 shows an electronic school teaching system. Each student has a read and test unit in the form of a textbook memory module which is connected to a teachers' computer and an administrative computer in the main office. The students unit receives homework assignments and allows the student to review the assigned material and perform their homework or tests thereon. Tests can be graded and the results given to both the teacher and the administrator for recordation. Systems such as this are useful in helping the teacher instruct students in their lessons. However, it does not add any fun or additional functions to the wireless devices of the student.

U.S. Patent Application US 2002/0013831 A (a continuation-in-part application of U.S. Patent Application 09/609,581 filed on June 30, 1999) describes a network having mobile terminals with wireless access to the Internet. This system describes how terminals may become part of a group and how a gateway server provides management services. However, this system does not provide for additional functionality on the parts of the terminals or for students to have more fun in using their wireless devices.

EP 1 022 876 A1 discloses a local network in which services available on a given terminal are advertised through the sending of service information to other terminals connected to the network.

EP 1 229 442 A2 discloses a peer-to-peer platform network that can be used for a number of purposes, such as file sharing, including sharing of active content, resource sharing, distributed storage, content delivery and messaging between terminals within a group. Using this platform, applications written by a user of one of said terminals can be shared with other terminals within the group.

### SUMMARY OF THE INVENTION

According to the present invention, a wireless terminal comprises a transmitter, a receiver, a communication device configured to handle messages that are wirelessly transmitted by the transmitter or received by the receiver to and from at least one other wireless terminal in a group that includes the wireless terminal, at least one function, wherein said at least one function is a software application that is common to all of the wireless terminals of the group, and at least one additional software application, which is not available to all of the wireless terminals of the group, and is configured so that, when the wireless terminal is a member of said group, at least one further additional software application provided by at least one other wireless terminal is shared with the wireless terminal, wherein said additional software application provides an enhancement of said at least one function, the wireless terminal being arranged to respond to said at least one other wireless terminal joining the group by enabling the further additional software application, wherein said further additional software application has been pre-stored in said wireless terminal.

For example, the enhancement may be an enhancement of an existing feature of the at least one function or an additional feature for use with the at least one function.

The present invention also provides a group comprising a plurality of such wireless terminals and also a wireless communication system comprising such a group.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

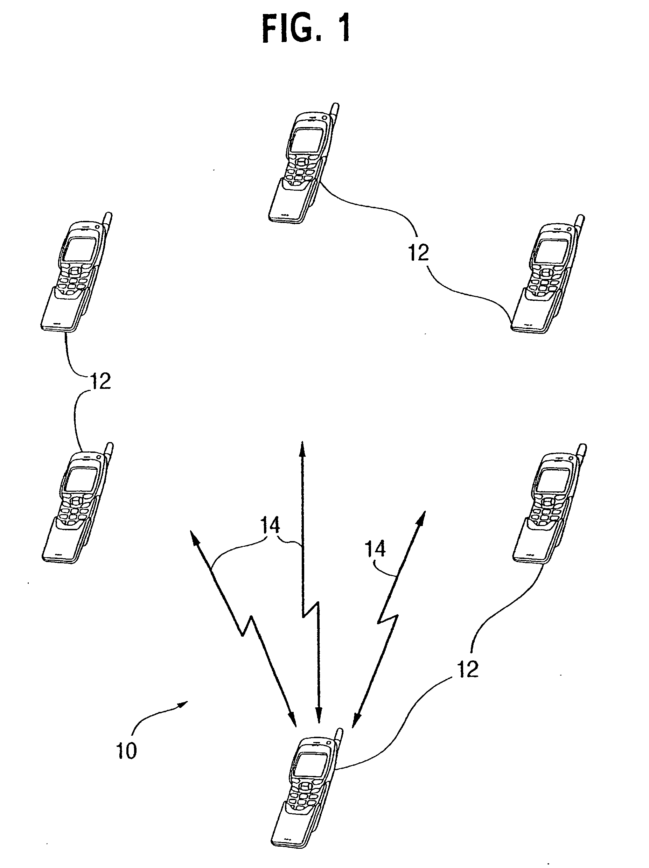

Figure 1 is a schematic representation of a group of wireless terminals according to the present invention;

### DESCRIPTION OF THE PREFERRED EMBODIMENTS

Referring now to the drawings, wherein like reference numerals designate identical or corresponding parts throughout the several views and more particularly to Figure 1 thereof, wherein a group 10 of individual wireless terminals 12 are shown interacting by way of local radio links 14 used for two-way communication. Although Figure 1 shows six terminals in the group, in fact any number of terminals can be included from two up to the maximum number, which the protocol is able to handle. In the case of Bluetooth, the maximum number is seven.

Although the preferred protocol is Blue tooth and the preferred communication link is a radio wave link, other protocols and communication links are also possible. Thus, any LPRF (low power radio frequency) point-to-point link or a communication link via WLAN, GSM, or other kinds of networks where members can communicate to each other by point-to-point connections can be used. Thus, infrared or other optical wavelengths could also be used. Other frequencies of radio waves could also be used as well as any other type of wireless communication. Other protocols could also be used in a similar fashion as long as they allow a group of terminals to operate together.

The basic idea is to use the terminal and the applications, which are contained therein together to acquire greater functionality than is possible by one terminal singly. Terminals within the same room or other space typically form the group. However, it is possible that terminals may be part of the group and be removed to a more remote site as long as communication is possible. The terminals communicate directly to each other in a peer-to-peer arrangement. No server is necessary as a connection point between the group members.

A group can be created among the terminals themselves. When the users of the terminals decide to create a new group, one of the terminals starts a procedure by polling the other nearby terminals and receiving responses. The beginning terminal acts as a master and the other terminals act as slave devices If it is decided that a different terminal should be the master, the master situation can be switched at any time. This procedure for starting a group using a master and switching the mastership to a different terminal is well known in the Bluetooth protocol. Once the group is established, it may be used for as long as the group decides. New members be added or dropped as desired. The group may operate even if one of the group members is not available.

Once the group is created, any member of the group will be recognized automatically when the environment is paged automatically. Terminals may be recognized by their identification numbers, which are permanently affixed in their memories. After the terminals have been recognized and acknowledged, the group session may then begin. This session can extend as long as desired until the group decides to end the session. The group may also be reinstated for a later session if desired. Group members may enter into different groups with different terminals for different purposes. A temporary group may also be established for a temporary time. In practice, the group is intended to be a relatively intimate group who can work together and in doing so create a more powerful device than they would have singly. For example, it would be a valuable working tool for small groups to do teamwork.

The basic concept of the terminals in the group is to have a basic function which is operable when not in a group but having additional software applications, providing other functionalities which may be shared when a group session is involved. Thus, the terminals may be sold with a certain basic set of functions, applications and software which are usable by themselves and which are identical from unit to unit. However, additional functionalities may be added randomly to the basic set which can then be shared when terminals interact in a group. Thus, when a terminal operates by itself it may only utilize the basic set of functions plus the additional software application that it contains itself. However, when operating in a group it has access to not only the basic function and its own additional software application, but also the additional software applications contained by other members of the group, which can be shared among them. Similarly, new versions of data and software could be shared with the group members.

For example, one facility, which may be used by group members, may involve a program such as a drawing application. The drawing application may be used in an enhanced state where features can be included such as additional activities, tools, drawing objects, etc. Users in a group may be capable of sharing one mutual drawing to be made together with each doing their own editing by using their own terminals. Alternatively, the group members can get additional software applications providing features of one facility to appear which is usable while the group is active. The enhanced features and drawing facilities may differ from one terminal to another meaning that the terminals of the group may have different software applications of the same software product. It may also happen that one group member has a software application of his terminal while the others are present and active, even though he does not necessarily do anything other than be present in the group. As additional group members arrive or join the group, more additional features become available to the group as a whole. At some point, the maximum number of features may be reached which may be less than the total number of members in the group. For example, the maximum functions may occur when four or five members are active in the group even though seven members are possible for the total group size. Thus, in a drawing program various feature enhancements may be possible and new image databases or sets of images may become available. Or a totally new feature may be available when enabled or awakened by another terminal when the group reaches a certain size.

Any type of software applications may become enabled when the group reaches a set size. For example, composing a piece of music may not be done alone and the software may be at least partly available when two or more members are present and in the group. When a third member arrives, polyphony music can be composed. Thus, additional features may be available once a certain group size is reached. Thus, text editing, animation, blinking, etc. may become available when the group is active or when a certain size of the group is reached. The result of these functions can be saved in each terminal. The product of the group, whether music, text, animation, drawing, etc. can be changed when the whole group is present and the group session is active. It can become a private product and can be used without the group being present if the group jointly decides to change it to a private file.

If the terminal of one of the group members is lost, broken or stolen, the rest of the members can still enter into an active group. The person not having a terminal can write in his password or pin number and thus provide proof of his being in the group. The missing terminal can be removed from the group and allow the rest of the terminals to be considered a full group. It may be necessary for the remaining group members to change their passwords or pin numbers. This may be helpful if something happens to one group member when the remaining group members need to continue their work.

Each terminal may have a password, which is conveyed to the other terminals in the group for exceptional situations. Then all the terminals belonging to the group have the passwords of other members as well as their own terminal identifications. If more than one member of the group is absent, the group owned files might not be accessed. The majority of the remaining group members can remove a group member from the group. Thus, files owned by a group can be updated to include information of the group. If files refer to group information outside the file, the group information can be checked from the updated list of members. The group rules may also require that if more than one group member is absent then files owned by the group may not be accessible. If a group member decides to resign from the group, the group members need to agree. Group owned file membership is arranged when the resignation is agreed upon. If more than one group member has left the group without first agreeing, the group owned files are left as such without changing ownership. Thus, various rules of who owns the group files are provided internally so that commonly conceived work cannot be removed by individuals.

Another possibility to handle missing members is to have a clearing-house arrangement so that when the rest of the group is active, the clearing-house server can be contacted to obtain the missing member password. Since a clearinghouse is secure and an authorized party, the answer is trustworthy. After having proved the absence of the missing person, the group might remove him from the group. The trustworthy party may be the mother of a child if the group members are children, the teacher where the group is in a classroom, the head of human resources if the group is a work related group, etc. It is also possible that ciphering keys can be used so that the files are encrypted. This is especially useful if the terminal are involved in business applications and the users are workers of a company.

When the software is produced which will be in the terminals when sold, the various terminal units may include different versions of the same software applications or features. Thus, not all of the terminal buyers get 100% of the same software in their terminals although the application or features are titled the same and are for the same sort of basic useages of the software products of the terminals. When a group meets in some group size, the missing parts of the software are enabled in each other's terminals temporarily. This does not exclude a member from retaining the capability of executing some piece of software permanently for private use as an incentive for joining groups frequently. This could apply especially to users who join multiple groups frequently as recorded by his terminal device. From a business perspective this could apply to software, which are not the latest software version. The owner of a terminal does not know what additional sections it includes until he is a member of a group.

If a game is bought which has been labeled to indicate that it can be enhanced in a group, some parts or additional features of the game will not be available to be seen or used until he has joined a group. Then depending on the original software product optional things are enabled when a user joins a group of a certain size. If others have bought the same game, the game may expand into new levels when the owners belong to some group and are active. The game can also expand to a new layer when in a group one player has certain game software and others are present with their terminals active. The single user can play while others observe his playing from their own terminals. The invention can be applied in a GSM system in which a set of point-to-point connections is handled. For example, in a network environment including a GPRS or 3G-system, the terminals including the subject functioning can be used. While a server and a network can be used as well, the present invention need not have any supporting server for the group management controller activities.

The end result of using the terminals in a group is that users, especially children will enjoy using their devices in new ways in a group, which they cannot do separately. In addition, it allows students or workers to jointly work together on projects. This innovation gives incentive to users to explore what additional functions can be achieved in various groups. Thus, it allows for a social interaction and fun with friends and additional ways of being creative and sharing in groups.

## Claims

1. A wireless terminal (12) comprising:
a transmitter;
a receiver;
a communication device configured to handle messages that are wirelessly transmitted by the transmitter or received by the receiver to and from at least one other wireless terminal in a group (10) that includes the wireless terminal; and
at least one function, wherein said at least one function is a software application that is common to all of the wireless terminals of the group; and
at least one additional software application, which is not available to all of the wireless terminals of the group;
the wireless terminal being configured so that, when the wireless terminal is a member of said group, at least one further additional software application provided by at least one other wireless terminal is shared with the wireless terminal, wherein said further additional software application provides an enhancement of said at least one function;
**characterised in that:**
said wireless terminal is arranged to respond to said at least one other wireless terminal joining the group by enabling the further additional software application, wherein said additional software application has been pre-stored in said wireless terminal.

2. A wireless terminal (12) according to claim 1, wherein said enhancement is an enhancement of an existing feature of said one function.

3. A wireless terminal (12) according to claim 1, wherein said enhancement is an additional feature for use with said one function.

4. A group (10) comprising:
a plurality of wireless terminals (12) according to any one of claims 1, 2 or 3, arranged for wireless communication with one another;
arranged so that, when said at least one other wireless terminal joins the group, said additional software application is enabled in said at least one other wireless terminal, wherein said additional software application has been pre-stored in said at least one other wireless terminal.

5. A group (10) according to claim 4, wherein one of the wireless terminals of the group is arranged to act as a master terminal in order to control interactions between the terminals of the group.

6. A group (10) according to claim 5, wherein:
the wireless terminals (12) are configured to communicate with one another to determine if each of the wireless terminals has a recognised identification and, upon recognition and acknowledgement of the group members, to initiate a group session during which said additional software application and said further additional software application are shared between said wireless terminals.

7. A group (10) according to claim 5 or 6, wherein:
said terminals (12) are configured to perform the wireless communication via a low power radio frequency link (14).

8. A group (10) according to claim 5, 6 or 7, wherein:
the group includes a minimum of two and a maximum of seven terminals (12).

9. A group (10) according to any one of claims 5 to 8, wherein:
at least one wireless terminal (12) in the group may be removed from the group by a remainder of the wireless terminals in the group.

10. A group (10) according to claim 4 or 5, configured so that at least one of the additional software application and the further additional software application is shared with the group only when the group comprises a minimum number of terminals (12).

11. A group (10) according to claim 4 or 5, arranged so that:
after having been a member of the group, at least one of said other wireless terminals (12) remains capable of executing the further additional software application.

12. A wireless communication system, comprising:
a group (10) according to any one of claims 4 to 11;
wherein one of the wireless terminals (12) of said group is configured as a master device and is arranged to poll by wireless communication others of the plurality of wireless terminals to join the group as slave devices.

## Patentansprüche

1. Drahtloses Endgerät (12) umfassend:
einen Sender;
einen Empfänger;
eine Kommunikationseinrichtung, die konfiguriert ist, Nachrichten an und von wenigstens einem anderen drahtlosen Endgerät in einer Gruppe (10), die das drahtlose Endgerät enthält, die drahtlos durch den Sender gesendet wurden oder durch den Empfänger empfangen wurden, abzuwickeln; und
wenigstens eine Funktion, wobei die wenigstens eine Funktion eine Softwareanwendung ist, die allen drahtlosen Endgeräte der Gruppe gemeinsam ist; und
wenigstens eine zusätzlich Softwareanwendung, die nicht für alle drahtlosen Endgeräte der Gruppe verfügbar ist;
wobei das drahtlose Engeräte so konfiguriert ist, dass, wenn das drahtlose Endgerät ein Mitglied der Gruppe ist, wenigstens eine andere zusätzliche Softwareanwendung, die durch wenigstens ein anderes drahtloses Endgerät bereitgestellt wird, mit dem drahtlosen Endgerät gemeinsam genutzt wird, wobei die weitere zusätzliche Softwareanwendung eine Verbesserung der wenigstens einen Funktion bereitstellt;
**dadurch gekennzeichnet, dass** das drahtlose Endgerät eingerichtet ist, dem wenigstens einen anderen drahtlosen Endgerät, das der Gruppe beitritt, durch Aktivieren der weiteren zusätzlichen Softwareanwendung zu antworten, wobei die zusätzliche Softwareanwendung im drahtlosen Endgerät vorgespeichert worden ist.

2. Drahtloses Endgerät (12) gemäß Anspruch 1, wobei die Verbesserung eine Verbesserung eines bestehenden Merkmals der einen Funktion ist.

3. Drahtloses Endgerät (12) gemäß Anspruch 1, wobei die Verbesserung ein zusätzliches Merkmal zur Verwendung der einen Funktion ist.

4. Gruppe (10) umfassend:
eine Vielzahl von drahtlosen Endgeräten (12) gemäß einem der Ansprüche 1, 2 oder 3, die für eine drahtlose Kommunikation miteinander eingerichtet sind,
wobei die Gruppe so eingerichtet ist, dass, wenn wenigstens ein anderes drahtloses Endgerät der Gruppe beitritt, die zusätzliche Softwareanwendung im wenigstens einen anderen drahtlosen Endgerät aktiviert wird, wobei die zusätzliche Softwareanwendung im wenigstens einen anderen drahtlosen Endgerät vorgespeichert worden ist.

5. Gruppe (10) gemäß Anspruch 4, wobei eines der drahtlosen Endgeräte der Gruppe eingerichtet ist, als Masterendgerät zu fungieren, um Interaktion zwischen den Endgeräten der Gruppe zu steuern.

6. Gruppe (10) gemäß Anspruch 5, wobei:
die drahtlosen Endgeräte (12) konfiguriert sind, miteinander zu kommunizieren, um festzustellen, ob jedes der drahtlosen Endgeräte eine erkennbare Kennung besitzt, und
auf Erkennen und Bestätigung der Gruppenmitglieder hin, eine Gruppensitzung zu initiieren, während der die zusätzliche Softwareanwendung und die weitere zusätzliche Softwareanwendung zwischen den drahtlosen Endgeräten gemeinsam genutzt wird.

7. Gruppe (10) gemäß Anspruch 5 oder 6, wobei:
die Endgeräte (12) konfiguriert sind, die drahtlose Kommunikation über eine Funkfrequenzverbindung (14) mit niedriger Leistung durchzuführen.

8. Gruppe (10) gemäß Anspruch 5, 6 oder 7, wobei:
die Gruppe mindestens zwei und maximal sieben Endgeräte (12) enthält.

9. Gruppe (10) gemäß einem der Ansprüche 5 bis 8, wobei:
wenigstens ein drahtloses Endgerät (12) in der Gruppe aus der Gruppe durch einen Rest der drahtlosen Endgeräte in der Gruppe entfernt werden kann.

10. Gruppe (10) gemäß Anspruch 4 oder 5, die so konfiguriert ist, dass wenigstens eines von der zusätzlichen Softwareanwendung und der weiteren zusätzlichen Softwareanwendung innerhalb der Gruppe gemeinsam genutzt wird, nur, wenn die Gruppe eine Minimalanzahl von Endgeräten (12) umfasst.

11. Gruppe (10) gemäß Anspruch 4 oder 5, die so eingerichtet ist, dass:
nachdem es ein Mitglied der Gruppe gewesen ist, wenigstens eines der anderen drahtlosen Endgeräte (12) fähig bleibt, die weitere zusätzliche Softwareanwendung auszuführen.

12. Drahtloses Kommunikationssystem, umfassend:
eine Gruppe (10) gemäß einem der Ansprüche 4 bis 11;
wobei eines der drahtlosen Endgeräte (12) der Gruppe als Mastergerät konfiguriert und eingerichtet ist, mittels drahtloser Kommunikation andere der Vielzahl von drahtlosen Endgeräten zyklisch abzufragen, um sich der Gruppe als ein Slave-Gerät anzuschließen.

## Revendications

1. Terminal sans fil (12) comportant:
un émetteur ;
un récepteur ;
un dispositif de communication configuré pour traiter des messages qui sont transmis sans fil par l'émetteur ou reçus par le récepteur, à et depuis au moins un autre terminal sans fil dans un groupe (10) qui comporte le terminal sans fil ; et
au moins une fonction, où ladite au moins une fonction est une application logicielle qui est commune à tous les terminaux sans fil du groupe ; et
au moins une application logicielle supplémentaire, qui n'est pas disponible pour tous les terminaux sans fil du groupe ;
le terminal sans fil étant configuré de sorte que, lorsque le terminal sans fil est un élément dudit groupe, au moins une autre application logicielle supplémentaire délivrée par au moins un autre terminal sans fil est partagée avec le terminal sans fil, dans lequel ladite une autre application logicielle supplémentaire fournit une amélioration de ladite au moins une fonction ;
**caractérisé en ce que** :
ledit terminal sans fil est agencé pour répondre audit au moins un autre terminal sans fil rejoignant le groupe en activant l'autre application logicielle supplémentaire, dans lequel ladite application logicielle supplémentaire a été stockée au préalable dans ledit terminal sans fil.

2. Terminal sans fil (12) selon la revendication 1, dans lequel ladite amélioration est une amélioration d'une caractéristique existante de ladite une fonction.

3. Terminal sans fil (12) selon la revendication 1, dans lequel ladite amélioration est une caractéristique supplémentaire à utiliser avec ladite une fonction.

4. Groupe (10) comportant :
une pluralité de terminaux sans fil (12) selon l'une quelconque des revendications 1, 2 ou 3, agencée en vue d'une communication sans fil mutuelle ;
agencée de sorte que, lorsque ledit au moins un autre terminal sans fil rejoint le groupe, ladite application logicielle supplémentaire est activée dans ledit au moins un autre terminal sans fil, dans lequel ladite application logicielle supplémentaire a été stockée au préalable dans ledit au moins un autre terminal sans fil.

5. Groupe (10) selon la revendication 4, dans lequel l'un des terminaux sans fil du groupe est agencé pour prendre la fonction de terminal maître afin de commander les interactions entre les terminaux du groupe.

6. Groupe (10) selon la revendication 5, dans lequel :
les terminaux sans fil (12) sont configurés pour communiquer mutuellement afin de déterminer si chacun des terminaux sans fil présente une identification reconnue et, après reconnaissance et accusé de réception des éléments de groupe, pour initier une session de groupe au cours de laquelle ladite application logicielle supplémentaire et ladite une autre application logicielle supplémentaire sont partagées entre lesdits terminaux sans fil.

7. Groupe (10) selon la revendication 5 ou 6, dans lequel :
lesdits terminaux (12) sont configurés pour exécuter la communication sans fil via une liaison de radiofréquence de puissance faible (14).

8. Groupe (10) selon la revendication 5, 6 ou 7, dans lequel :
le groupe inclut un minimum de deux et un maximum de sept terminaux (12).

9. Groupe (10) selon l'une quelconque des revendications 5 à 8, dans lequel :
au moins un terminal sans fil (12) dans le groupe peut être supprimé du groupe par un autre des terminaux sans fil dans le groupe.

10. Groupe (10) selon la revendication 4 ou 5, configuré de sorte qu'au moins une parmi l'application logicielle supplémentaire et l'autre application logicielle supplémentaire est partagée avec le groupe uniquement lorsque le groupe comporte un nombre minimum de terminaux (12).

11. Groupe (10) selon la revendication 4 ou 5, agencé de sorte que :
après avoir été un élément du groupe, au moins un desdits autres terminaux sans fil (12) reste en mesure d'exécuter l'autre application logicielle supplémentaire.

12. Système de communication sans fil, comportant :
un groupe (10) selon l'une quelconque de revendications 4 à 11 ;
dans lequel l'un des terminaux (12) dudit groupe est configuré en tant qu'un dispositif maître et est agencé pour inviter, au moyen d'une communication sans fil, d'autres de la pluralité de terminaux sans fil à rejoindre le groupe en tant que dispositifs esclaves.
